# EUROPÄISCHE PATENTSCHRIFT

(11) **EP 1 771 273 B1**
(45) Veröffentlichungstag und Bekanntmachung des Hinweises auf die Patenterteilung: **02.01.2008**
(21) Anmeldenummer: 05747870.3
(22) Anmeldetag: 07.05.2005
(51) Int. Cl.: B23K 10/02, B02C 4/30, C22C 38/44

(54) **GUTBETT-WALZENMÜHLE**
PARTICLE BED ROLLER MILL
BROYEUR A CYLINDRES A LIT DE MATIERE

(30) Priorität: 21.05.2004 DE 102004025175
(43) Veröffentlichungstag der Anmeldung: 11.04.2007
(73) Patentinhaber: Tronox Pigments International GmbH, 8001 Zürich (CH)
(72) Erfinder: DÖRSCHUG, Uwe, 47918 Tönisvorst (DE); KÄMMERER, Knut, 41464 Neuss (DE); LAUBACH, Benno, 47809 Krefeld (DE)
(74) Vertreter: Viering, Jentschura & Partner
(86) Internationale Anmeldenummer: PCT/EP2005/004968
(87) Internationale Veröffentlichungsnummer: WO 2005/113185

(56) Entgegenhaltungen:
- DE-A1- 3 814 433
- DE-A1- 4 409 619
- US-A- 4 172 155
- US-A- 4 484 959
- US-A- 6 124 564
- HOWARD B. CARY: "Modern Welding Technology" 1989, REGENTS/PRENTICE HALL , ENGLEWOOD CLIFFS, NEW JERSEY 07632 , XP002342133 Seite 2 - Seite 3 Seite 719 - Seite 724

## Beschreibung

Die Erfindung richtet sich auf eine Mahlwalze, die in eine zwei gegenläufig angetriebene, zwischen sich einen Mahlgutspalt ausbildende Mahlwalzen aufweisende Walzenmühle, insbesondere eine Gutbett-Walzenmühle, einbaubar ist und die einen Walzengrundkörper aus Stahl und eine darauf mittels Plasma-Pulver-Auftragsschweißen aufgetragene Hartwerkstoffschale umfasst.

Weiterhin richtet sich die Erfindung auf ein Verfahren zur Herstellung einer Mahlwalze, eine Walzenmühle und die Verwendung einer Mahlwalze sowie ein Verfahren zur Herstellung eines Titandioxid-Pigmentes.

Das Mahlen gehört zu den energieaufwändigsten Produktionsschritten in der Grundstoffindustrie. Zur Reduzierung des Energieaufwandes ist die so genannte Gutbett-Walzenmühle entwickelt worden. Die Gutbett-Walzenmühle weist zwei gegenläufig rotierende Walzen auf, die zwischen sich einen Walzenspalt ausbilden, in welchen das Mahlgut eingezogen und unter hohem Druck zerkleinert wird. Das zerkleinerte Mahlgut verlässt den Walzenspalt in Form einer so genannten "Schülpe", die anschließend desagglommeriert oder aufgeschlossen werden muss. Eine der beiden Walzen ist fest in einem Gestell angeordnet und die andere der beiden Walzen ist hydraulisch verfahrbar in dem Walzengestell angeordnet, so dass der Walzenspalt durch das Verfahren dieser so genannten Loswalze verstellbar und damit der für die Verkleinerung zur Verfügung stehende, aufzubringende Druck variierbar ist. Für das Zerkleinern von hartem, die Walzen stark beanspruchendem und verschleißendem Material werden so genannte Glattwalzen mit glatter Oberfläche verwendet. Hierbei ist es auch möglich, durch Auftragsschweißung auf einen Walzengrundkörper einen Hartwerkstoff aufzuschweißen, der dann eine den Walzengrundkörper umhüllende Hartwerkstoffschale ausbildet.

Problematisch bei derartigen Mühlen ist es, dass die darin zum Einsatz kommenden Mahlwalzen auf der einen Seite einer hohen Druckbelastung, insbesondere einer linienförmigen Druckbelastung, unterliegen und insbesondere bei der Mahlung von hartem Material einem hohen abrasiven Verschleiß ausgesetzt sind. Diese beiden Anforderungen bestimmen das Betriebsverhalten einer Mahlwalze und bedingen eine optimale Abstimmung der Materialien des Walzengrundkörpers und des Hartwerkstoffschalenmaterials. Sind diese nicht optimal aufeinander abgestimmt, besteht die Gefahr, dass die Hartwerkstoffschale während des Betriebes vom Walzengrundkörper abplatzt oder dass ein nur unbefriedigender Widerstand gegen Verschleißerscheinungen vorhanden ist, so dass die Mahlwalzen dann zu geringe Betriebsstandzeiten aufweisen. Die bisher bekannten Materialkombinationen und Mahlwalzen weisen noch ein unbefriedigendes Verschleiß- und Betriebsverhalten auf.

So ist aus der DE 38 14 433 A1 eine Walzenmühle mit einer Mahlwalze bekannt, die einen Walzengrundkörper aus Stahl und eine aufgebrachte Hartwerkstoffschale aufweist. Bei dieser Mahlwalze besteht der Walzengrundkörper aus einem Kohlenstoffstahl oder einem legierten Stahl und die Hartwerkstoffschale bzw. Verschleißschicht aus kohlenstoffarmem Stahl mit Legierungselementen.

Bei einer aus der EP 0 728 523 B1 bekannten Mahlwalze besteht der Walzengrundkörper aus kohlenstoffarmem, legiertem Stahl und der Hartwerkstoff aus einer Metallmatrix mit eingelagerten Wolframkarbiden.

Eine Plasma-Pulver-Auftragsschweißung für eine Oberflächenbehandlung einer Mahlwalze geht aus der EP 0 634 217 A1 hervor.

Der Erfindung liegt daher die Aufgabe zugrunde, eine Lösung zu schaffen, mit der sich ein verbessertes Verschleiß- und Betriebsverhalten von gattungsgemäßen Mahlwalzen erzielen lässt.

Bei einer Mahlwalze der eingangs bezeichneten Art wird diese Aufgabe erfindungsgemäß dadurch gelöst, dass der Walzengrundkörper aus einem kohlenstoffarmen, niedrig legierten Einsatzstahl und die Hartwerkstoffschale aus einem kohlenstoffarmen, hoch legierten Stahlwerkstoff besteht, wobei Einsatzstahl und Stahlwerkstoff einen Kohlenstoffgehalt von kleiner gleich 0,3 Gew.-% aufweisen. Hierdurch wird ein optimales Verschleiß- und Betriebsverhalten erreicht. Dadurch, dass beide Materialien kohlenstoffarm sind, ist die Gefahr der so genannten Unternahtrissigkeit und die damit verbundene Abplatzung der mittels Plasma-Pulver-Auftragsschweißens aufgetragenen Hartwerkstoffschale vermieden. Beim Plasma-Pulver-Auftragsschweißen kommt es zu einer Aufschmelzung auch der Oberfläche des Walzengrundkörpers und zu einer Vermischung des Walzengrundkörpermaterials und des durch den Plasmabogen schmelzflüssig gewordenen aufzutragenden Pulvers. Dies ist in diesem Falle nicht nachteilig, da beide Materialien kohlenstoffarm sind und daher beim Abkühlen ein einheitliches Gefüge in diesem Bereich (Vermischungsbereich) ausbilden. Zur Außenseite hin ist der Hartwerkstoff aufgrund des Gehaltes an Legierungselementen hart und verschleißfest ausgebildet. Der demgegenüber relativ "weiche" niedrig legierte Einsatzstahl ermöglicht es, trotz der harten Außenschicht einen hohen Liniendruck mit der erfindungsgemäßen Mahlwalze aufzubringen, da der Walzengrundkörper aufgrund seiner Niedriglegierung relativ "weich" ausgebildet ist.

Der Walzengrundkörper besteht aus einem kohlenstoffarmen, niedrig legierten Einsatzstahl und die Hartwerkstoffschale aus einem kohlenstoffarmen, hoch legierten Stahlwerkstoff, wobei Einsatzstahl und Stahlwerkstoff einen Kohlenstoffgehalt von kleiner gleich 0,3 Gew.-% aufweisen.

Eine besonders gute Werkstoffkombination, die Mahlwalzen hervorbringt, die neben einer hohen Druckbelastung auch einen besonders hohen abrasiven Verschleißwiderstand aufweisen, sind gemäß Ausgestaltung der Erfindung dadurch gekennzeichnet, dass der Walzengrundkörper aus einer Stahllegierung mit weniger als 0,25 Gew.-% C, vorzugsweise 0,15 bis 0,21 Gew.-% C, und weniger als 0,4 Gew.-% Mo, vorzugsweise 0,25 bis 0,35 Gew.-% Mo, und weniger als 2 Gew.-% Cr, vorzugsweise 1,5 bis 1,8 Gew.-% Cr, und weniger als 2 Gew.-% Ni, vorzugsweise 1,4 bis 1,7 Gew.-% Ni, und weniger als 1 Gew.-% Mn, vorzugsweise 0,5 bis 0,9 Gew.-% Mn besteht und die Hartwerkstoffschale aus einer Nickel-Silizium-Chrom-Bor-Matrix mit einem Anteil von 40 bis 80 Gew.-%, vorzugsweise 45 bis 75 Gew.-%, insbesondere 60 Gew.-% an darin eingelagerten Wolfram-Karbiden besteht.

Diese besondere Kombination zeichnet sich durch eine deutlich verbesserte Standzeit gegenüber bekannten Mahlwalzen mit hoch abrasionsbeständigen Hartwerkstoffmaterialien aus, da die hoch verschleißfesten Wolfram-Karbide mit einer Härte von 2400 HV 0,4 (Vickers-Härte) in der Nickel-Silizium-Chrom-Bor-Matrix mit einer Härte von ca. 60 Hrc (Rockwell-Härte) gleichmäßig verteilt vorliegen.

Für die mechanischen Eigenschaften und das Verschleiß- und Betriebsverhalten der Mahlwalze ist es von Vorteil, wenn die Dicke/Stärke der durch Auftragsschweißen aufgetragenen Hartwerkstoffschale 2 bis 8 mm, vorzugsweise 4 bis 6 mm, insbesondere 5,5 mm beträgt.

Aufgrund der besonders verschleißfesten Oberfläche ist eine Strukturierung der Mahlwalzenoberfläche nicht notwendig, so dass die Erfindung sich weiterhin durch eine glattflächige Oberseite der Mahlwalze auszeichnet.

Des weiteren wird die oben stehende Aufgabe durch ein Verfahren zur Herstellung einer Mahlwalze gelöst. Die Erfindung sieht daher auch ein Verfahren zur Herstellung einer Mahlwalze nach einem der Ansprüche 1 bis 4 vor, die dadurch gekennzeichnet ist, dass der Walzengrundkörper auf eine Temperatur von 200 °C erwärmt und anschließend das Hartwerkstoffschalenmaterial mittels Plasma-Pulver-Auftragsschweißen aufgetragen wird.

Hierbei ist es besonders zweckmäßig, wenn das Hartwerkstoffschalenmaterial in zwei Lagen aufgetragen wird, was die Erfindung weiterhin vorsieht.

Um ein Abplatzen des Hartschalenwerkstoffmaterials von dem Walzengrundkörper zu verhindern, zeichnet sich die Erfindung in Ausgestaltung weiterhin dadurch aus, dass die Mahlwalze nach dem Auftrag des Hartwerkstoffschalenmaterials in ein Isoliermaterial, vorzugsweise Steinwolle, eingehüllt und langsam abgekühlt wird.

Besonders geeignet ist die Mahlwalze für den Einsatz in einer Walzenmühle, so dass die Erfindung zur Lösung der oben stehenden Aufgabe weiterhin eine Walzenmühle, insbesondere eine Gutbett-Walzenmühle, vorsieht, die dadurch gekennzeichnet ist, dass sie Mahlwalzen nach einem der Ansprüche 1 bis 4 aufweist.

Besonders gut einzusetzen und dann durch ein besonders geeignetes Verschleiß- und Betriebsverhalten gekennzeichnet ist die erfindungsgemäße Mahlwalze dann, wenn sie für die Mahlung von Titandioxid Verwendung findet. Die Erfindung ist daher außerdem durch die Verwendung einer Mahlwalze nach einem der Ansprüche 1 bis 4 in einer Walzenmühle zur Mahlung von Titandioxid gekennzeichnet, wobei das Titandioxid eine Mohshärte von 6 bis 8, insbesondere 7, aufweist. Hierbei ist es von Vorteil und besonders zweckmäßig, die Mahlwalze in einer Walzenmühle einzusetzen, bei welcher die Korngröße des Titandioxids vor Eintritt in die Walzenmühle 0,1 bis 5 mm und nach Verlassen der Walzenmühle 0,1 µm bis 0,3 µm, vorzugsweise 0,15 bis 0,25 µm, beträgt.

Schließlich zeichnet sich die Erfindung noch durch ein Verfahren zur Herstellung eines Titandioxid-Pigments aus, bei welchem Titandioxid, das eine Mohshärte von 6 bis 8, insbesondere 7, aufweist, in einer Walzenmühle von einer Korngröße von 0,1 bis 5 mm unter Durchlaufen eines zwischen zwei Mahlwalzen ausgebildeten Mahlspaltes auf eine Größe von 0,1 bis 0,3 µm, vorzugsweise 0,15 bis 0,25 µm, gemahlen wird, wobei die Walzenmühle eine Mahlwalze nach einem der Ansprüche 1 bis 4 aufweist.

Die Erfindung ist nachstehend anhand einer Zeichnung beispielhaft näher erläutert.

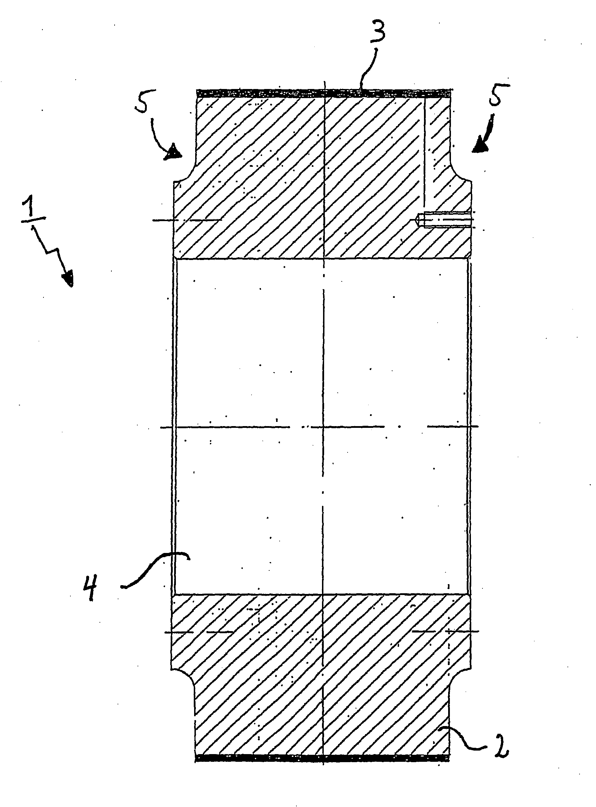

Die einzige Figur zeigt einen Schnitt durch eine insgesamt mit 1 bezeichnete Mahlwalze. Die Mahlwalze 1 weist einen Walzengrundkörper 2 und eine durch Plasma-Pulver-Auftragsschweißen auf die Außenfläche des Walzengrundkörpers 2 aufgetragene Hartwerkstoffschale 3 auf. Die Hartwerkstoffschale 3 hat eine Stärke bzw. Dicke von 5,5 mm. Sie besteht aus einem Werkstoff, der unter der Bezeichnung "DURMAT® 61 PTA" am Markt erhältlich ist. Es handelt sich dabei um ein Pulver auf Nickelbasis, das aufgeschmolzen in der Hartwerkstoffschale 3 eine Nickel(Ni)-Silizium(Si)-Chrom(Cr)-Bor(B)-Matrix mit einem Anteil von 60 Gew.-% an darin eingelagertem Wolfram-Karbid ausbildet. Die hoch verschleißfesten Wolfram-Karbide mit einer Härte von 2400 HV (Vickers-Härte) 0,4 sind in der Matrix, die eine Härte von ca. 60 HRc (Rockwell-Härte) aufweist, gleichmäßig verteilt. Die Hartwerkstoffschale 3 besteht aus einem kohlenstoffarmen, hochlegierten Stahlwerkstoff mit einem Kohlenstoffgehalt von kleiner gleich 0,3 Gew.-%.

Der Walzengrundkörper 2 besteht aus einem Stahl der Werkstoffnummer 1.6587 (17 CrNiMo 6). Dieser Werkstoff besteht zu 0,15 bis 0,21 Gew.-% aus Kohlenstoff (C), aus bis zu 0,4 Gew.-% Silizium (Si), aus 0,5 bis 0,9 Gew.-% Mangan (Mn), aus 0,025 Gew.-% Phosphor (P), aus bis zu 0,015 Gew.-% Schwefel (S), aus 1,5 bis 1,8 Gew.-% Chrom (Cr), aus 0,25 bis 0,35 Gew.-% Molybdän (Mo), aus 1,4 bis 1,7 Gew.-% Nickel (Ni) und aus weniger als 0,05 Gew.-% Aluminium (Al) sowie weniger als 0,3 Gew.-% Kupfer (Cu). Der Walzengrundkörper 2 besteht aus einem kohlenstoffarmen, niedrig legierten Einsatzstahl mit einem Kohlenstoffgehalt von kleiner gleich 0,3 Gew.-%.

Die Mahlwalze 1 weist oberseitig auf der Hartwerkstoffschale eine glattflächige Oberseite auf. Axial ist sie mit einer Öffnung 4 versehen, mit der die Mahlwalze 1 auf einer Antriebsachse festgelegt werden kann. Sowohl der Walzengrundkörper 2 als auch die Hartwerkstoffschale 3 bestehen aus einem kohlenstoffarmen Stahl bzw. einer kohlenstoffarmen Legierung. Unter kohlenstoffarm wird hier ein Kohlenstoffgehalt kleiner gleich 0,3, insbesondere kleiner gleich 0,25, Gew.-% Kohlenstoff (C) verstanden. Der Werkstoff des Walzengrundkörpers 2 ist ein kohlenstoffarmer, niedrig legierter Einsatzstahl. Der Werkstoff der Hartwerkstoffschale ist ein kohlenstoffarmer, legierter, insbesondere hochlegierter Stahlwerkstoff.

Bei dem Material des Walzengrundkörpers 2 handelt es sich um eine ausreichend druckfeste Stahllegierung mit einer hohen Streckgrenze.

Zur Herstellung der Mahlwalze 1 wird der Grundkörper 2 an den mittels Plasma-Pulver-Auftragsschweißen zu bearbeitenden Oberflächen mit sehr kleinen Zugaben vorgedreht, da das Auftragsschweißmaterial äußerst schwierig zu bearbeiten ist. Zur Begrenzung der mit dem Hartwerkstoffmaterial zu beschichtenden Oberflächenseite des Walzengrundkörpers 2 ist eine Ausfräsung 5 vorgesehen, die als Badsicherung des flüssig mittels Plasma-Pulver-Auftragsschweißens aufgetragenen Hartwerkstoffes dient. Vor der Schweißung wird der Walzengrundkörper 2 auf eine Temperatur von 200 °C vorgewärmt und danach mit dem Plasma-Pulver-Auftragsschweißen das Hartwerkstoffmaterial unter Ausbildung eines 300 Ampere Lichtbogens unter einem Argon-Helium-Schutzgasgemisch aufgetragen. Die Hartwerkstoffschale 3 wird zweilagig aufgetragen. Es wird eine Abschmelzleistung bei diesem Verfahren von ca. 5 bis 6 kg Hartwerkstoffmaterial pro Stunde erreicht. Um nach dem Auftragsschweißen größere Spannungsrisse zu vermeiden, wird die Mahlwalze 1 anschließend in Steinwolle eingehüllt bzw. eingepackt und langsam abgekühlt. Die beim Schweißen gegebenenfalls in der Hartwerkstoffschale entstehende Härterisse im Mikrometerbereich (Mikrorisse) lassen sich bei dem gewählt harten Werkstoff mit einem Anteil an harten Wolfram-Karbiden in Höhe von 60 Gew.-% und einer Matrixhärte von ca. 60 HRc nicht vermeiden. Sie sind sogar erwünscht, um den dreiachsigen Spannungszustand abzubauen, der ein Ablösen der aufgeschweißten Hartwerkstoffschale 3 von dem Walzengrundkörper 2 bewirken könnte.

Die Mahlwalze 1 wird insbesondere in einer so genannten Gutbett-Walzenmühle verwendet, in der sich zwei gegenläufig angetriebene Mahlwalzen 1 gegenüber stehen, die zwischen sich einen Mahlgutspalt ausbilden. Besonders gut lässt sich mit einer die Mahlwalzen 1 aufweisenden Walzenmühle Titandioxid mahlen, das eine Mohshärte von 7 aufweist und von einer Eintrittsgröße von 0,1 bis 5 mm vor der Walzenmühle auf eine Korngröße des Titandioxids von 0,2 µm nach Durchlaufen der Walzenmühle heruntergemahlen wird. Dieses Titandioxid wird dann zu einem Pigment weiterverarbeitet.

## Patentansprüche

1. Mahlwalze (1), die in eine zwei gegenläufig angetriebene, zwischen sich einen Mahlgutspalt ausbildende Mahlwalzen (1) aufweisende Walzenmühle, insbesondere eine Gutbett-Walzenmühle, einbaubar ist und die einen Walzengrundkörper (2) aus Stahl und eine darauf mittels Plasma-Pulver-Auftragsschweißen aufgetragene Hartwerkstoffschale umfasst,
**dadurch gekennzeichnet,**
**dass** der Walzengrundkörper (2) aus einem kohlenstoffarmen, niedrig legierten Einsatzstahl und die Hartwerkstoffschale (3) aus einem kohlenstoffarmen, hoch legierten Stahlwerkstoff besteht, wobei Einsatzstahl und Stahlwerkstoff einen Kohlenstoffgehalt von kleiner gleich 0,3 Gew.-% aufweisen.

2. Mahlwalze nach Anspruch 1, **dadurch gekennzeichnet, dass** der Walzengrundkörper (2) aus einer Stahllegierung mit weniger als 0,25 Gew.-% C, vorzugsweise 0,15 bis 0,21 Gew.-% C, und weniger als 0,4 Gew.-% Mo, vorzugsweise 0,25 bis 0,35 Gew.-% Mo, und weniger als 2 Gew.-% Cr, vorzugsweise 1,5 bis 1,8 Gew.-% Cr, und weniger als 2 Gew.-% Ni, vorzugsweise 1,4 bis 1,7 Gew.-% Ni, und weniger als 1 Gew.-% Mn, vorzugsweise 0,5 bis 0,9 Gew.-% Mn, besteht und die Hartwerkstoffschale (3) aus einer Ni-Si-Cr-B-Matrix mit einem Anteil von 40 bis 80 Gew.-%, vorzugsweise 45 bis 75 Gew.-%, insbesondere 60 Gew.-%, an darin eingelagerten Wolfram-Karbiden besteht.

3. Mahlwalze nach Anspruch 1 oder 2, **dadurch gekennzeichnet, dass** die Dicke/Stärke der durch Auftragsschweißen aufgetragenen Hartwerkstoffschale (3) 2 bis 8 mm, vorzugsweise 4 bis 6 mm, insbesondere 5,5 mm, beträgt.

4. Mahlwalze nach einem der vorhergehenden Ansprüche **gekennzeichnet durch** eine glattflächige Oberseite.

5. Verfahren zur Herstellung einer Mahlwalze (1) nach einem der vorhergehenden Ansprüche,
**dadurch gekennzeichnet,**
**dass** der Walzengrundkörper (2) auf eine Temperatur von 200 °C erwärmt und anschließend das Hartwerkstoffschalenmaterial mittels Plasma-Pulver-Auftragsschweißen aufgetragen wird.

6. Verfahren nach Anspruch 5, **dadurch gekennzeichnet, dass** das Hartwerkstoffschalenmaterial in zwei Lagen aufgetragen wird.

7. Verfahren nach Anspruch 5 oder 6, **dadurch gekennzeichnet, dass** die Mahlwalze (1) nach dem Auftrag des Hartwerkstoffschalenmaterials in ein Isoliermaterial, vorzugsweise Steinwolle, eingehüllt und langsam abgekühlt wird.

8. Walzenmühle, insbesondere Gutbett-Walzenmühle,
**dadurch gekennzeichnet,**
**dass** sie Mahlwalzen (1) nach einem der Ansprüche 1 bis 4 aufweist.

9. Verwendung einer Mahlwalze (1) nach einem der Ansprüche 1 bis 4 in einer Walzenmühle zur Mahlung von Titandioxid, das eine Mohshärte von 6 bis 8, insbesondere 7, aufweist.

10. Verwendung einer Mahlwalze nach Anspruch 9, **dadurch gekennzeichnet, dass** die Korngröße des Titandioxids vor Eintritt in die Walzenmühle 0,1 bis 5 mm und nach Verlassen der Walzenmühle 0,1 bis 0,3 µm, vorzugsweise 0,15 bis 0,25 µm, beträgt.

11. Verfahren zur Herstellung eines Titandioxid-Pigments, bei welchem Titandioxid, das eine Mohshärte von 6 bis 8, vorzugsweise 7, aufweist in einer Walzenmühle von einer Korngröße von 0,1 bis 5 mm unter Durchlaufen eines zwischen zwei Mahlwalzen (1) ausgebildeten Mahlspaltes auf eine Größe von 0,1 bis 0,3 µm, vorzugsweise 0,15 bis 0,25 µm, gemahlen wird, wobei die Walzenmühle eine Mahlwalze (1) nach einem der Ansprüche 1 bis 4 aufweist.

## Claims

1. Grinding roll (1), which can be installed in a roll mill, in particular a material bed roll mill, having two grinding rolls (1) which are driven in counterrotation and form between them a gap for the material to be ground, and which comprises a roll base body (2) of steel and a hard material shell applied thereto by means of plasma powder deposit welding,
**characterised in**
**that** the roll base body (2) consists of a low-carbon, low-alloy case hardening steel and the hard material shell (3) consists of a low-carbon, high-alloy steel material, wherein the case hardening steel and the steel material have a carbon content of less than or equal to 0.3 wt.%.

2. Grinding roll according to Claim 1, **characterised in that** the roll base body (2) consists of a steel alloy with less than 0.25 wt.% of C, preferably 0.15 to 0.21 wt.% of C ,and less than 0.4 wt.% of Mo, preferably 0.25 to 0.35 wt.% of Mo, and less than 2 wt.% of Cr, preferably 1.5 to 1.8 wt.% of Cr, and less than 2 wt.% of Ni, preferably 1.4 to 1.7 wt.% of Ni, and less than 1 wt.% of Mn, preferably 0.5 to 0.9 wt.% of Mn, and the hard material shell (3) consists of a Ni, Si, Cr, B matrix with a proportion of 40 to 80 wt.%, preferably 45 to 75 wt.%, in particular 60 wt.%, of tungsten carbides included therein.

3. Grinding roll according to Claim 1 or 2, **characterised in that** the thickness of the hard material shell (3) applied by deposit welding is 2 to 8 mm, preferably 4 to 6 mm, in particular 5.5 mm.

4. Grinding roll according to any one of the preceding Claims, **characterised by** a smooth-surfaced upper side.

5. Process for producing a grinding roll (1) according to any one of the preceding Claims, **characterised in**
**that** the roll base body (2) is heated to a temperature of 200°C and subsequently the hard material shell material is applied by means of plasma powder deposit welding.

6. Process according to Claim 5, **characterised in that** the hard material shell material is applied in two layers.

7. Process according to Claim 5 or 6, **characterised in that** the grinding roll (1) is enclosed in an insulating material, preferably rock wool, and slowly cooled following the application of the hard material shell material.

8. Roll mill, in particular material bed roll mill,
**characterised in**
**that** it has grinding rolls (1) according to any one of Claims 1 to 4.

9. Use of a grinding roll (1) according to any one of Claims 1 to 4 in a roll mill for grinding titanium dioxide having a Mohs hardness of 6 to 8, in particular 7.

10. Use of a grinding roll according to Claim 9, **characterised in that** the grain size of the titanium dioxide before entering the roll mill is 0.1 to 5 mm and after leaving the roll mill is 0.1 to 0.3 µm, preferably 0.15 to 0.25 µm.

11. Process for producing a titanium dioxide pigment, in which titanium dioxide having a Mohs hardness of 6 to 8, preferably 7, is ground in a roll mill from a grain size of 0.1 to 5 mm while passing through a grinding gap formed between two grinding rolls (1) to a size of 0.1 to 0.3 µm, preferably 0.15 to 0.25 µm, wherein the roll mill has a grinding roll (1) according to any one of Claim 1 to 4.

## Revendications

1. Cylindre broyeur (1) pouvant être monté dans un broyeur à cylindres, en particulier dans un broyeur à cylindres à lit de matière, comprenant deux cylindres broyeurs (1) entraînés en sens opposé, formant entre eux une fente de mouture de la matière, et qui comprend un corps de base (2) du cylindre fait en acier, et une enveloppe de matière dure appliquée sur celui-ci par soudage de rechargement de matière poudreuse au plasma,
**caractérisé en ce que** le corps de base (2) du cylindre est réalisé en un acier cémenté pauvre en carbone, faiblement allié, et l'enveloppe de matière dure (3) est réalisée en un matériau d'acier pauvre en carbone, hautement allié, l'acier cémenté et le matériau d'acier présentant une teneur en carbone inférieure ou égale à 0,3 % en poids.

2. Cylindre broyeur selon la revendication 1, **caractérisé en ce que** le corps de base (2) est réalisé en un alliage d'acier contentant moins de 0,25 % en poids de C, de préférence de 0,15 à 0,21 % en poids de C, et moins de 0,4 % en poids de Mo, de préférence de 0,25 à 0,35 % en poids de Mo, et moins de 2 % en poids de Cr, de préférence de 1,5 à 1,8 % en poids de Cr, et moins de 2 % en poids de Ni, de préférence de 1,4 à 1,7 % en poids de Ni, et moins de 1 % en poids de Mn, de préférence de 0,5 à 0,9 % en poids de Mn, et que l'enveloppe de matière dure (3) est composée d'une matrice de Ni-Si-Cr-B ayant une teneur de 40 à 80 % en poids, de préférence de 45 à 75 % en poids, et notamment une teneur de 60 % en poids de carbures de tungstène dispersés dans celle-ci.

3. Cylindre broyeur selon la revendication 1 ou 2, **caractérisé en ce que** l'épaisseur de l'enveloppe de matière dure (3) appliquée par soudure de rechargement est de 2 à 8 mm, de préférence de 4 à 6 mm, et notamment d'une épaisseur de 5,5 mm.

4. Cylindre broyeur selon l'une des revendications précédentes, **caractérisé par** une surface extérieure lisse.

5. Procédé de fabrication d'un cylindre broyeur (1) selon l'une des revendications précédentes,
**caractérisé en ce que** le corps de base (2) du cylindre est chauffé à une température de 200 °C, et qu'ensuite, la matière de l'enveloppe de matière dure est déposée au moyen d'un soudage de rechargement de matière poudreuse au plasma.

6. Procédé selon la revendication 5, **caractérisé en ce que** la matière de l'enveloppe de matière dure est appliquée en deux couches.

7. Procédé selon la revendication 5 ou 6, **caractérisé en ce qu'**après l'application de la matière de l'enveloppe de matière dure, le cylindre broyeur (1) est enveloppé dans un matériau isolant, de préférence dans de la laine de roche, et est lentement refroidi.

8. Broyeur à cylindres, en particulier broyeur à cylindres à lit de matière, **caractérisé en ce qu'**il comprend des cylindres broyeurs (1) selon l'une des revendications 1 à 4.

9. Utilisation d'un cylindre broyeur (1) selon l'une des revendications 1 à 4 dans un broyeur à cylindres en vue de broyer du dioxyde de titane présentant une dureté Mohs de 6 à 8, en particulier une dureté de 7.

10. Utilisation d'un cylindre broyeur selon la revendication 9, **caractérisée en ce que** la granulométrie du dioxyde de titane avant son entrée dans le broyeur à cylindres est de 0,1 à 5 mm, et qu'après sa sortie du broyeur à cylindres, s'élève à 0,1 à 0,3 µm, de préférence de 0,15 à 0,25 µm.

11. Procédé de fabrication d'un pigment de dioxyde de titane, dans lequel du dioxyde de titane présentant une dureté de Mohs de 6 à 8, de préférence une dureté de 7, est réduit dans un broyeur à cylindres d'un nombre granulométrique de 0,1 à 5 mm à un nombre granulométrique de 0,1 à 0,3 µm, de préférence de 0,15 à 0,25 µm, en traversant une fente de mouture formée entre deux cylindres broyeurs (1), le broyeur à cylindres comprenant un cylindre broyeur (1) selon l'une des revendications 1 à 4.
